# EUROPEAN PATENT SPECIFICATION

(11) **EP 3 425 253 B1**
(45) Date of publication and mention of the grant of the patent: **09.10.2019**
(21) Application number: 18181928.5
(22) Date of filing: 05.07.2018
(51) Int. Cl.: F16L 37/091, F16L 37/092

(54) **PIPE COUPLING**
ROHRKUPPLUNG
RACCORD DE TUYAUX

(30) Priority: 06.07.2017 NL 2019193
(43) Date of publication of application: 09.01.2019
(73) Proprietor: M & G Group Europe B.V., 9403 AD Assen (NL)
(72) Inventor: van Hoorn, Hendrik, 9403 HH Assen (NL); Pepping, Klaas Jan, 9725 GR Groningen (NL)
(74) Representative: Nederlandsch Octrooibureau

(56) References cited:
- WO-A1-03/048625
- DE-A1- 19 945 721
- US-A- 4 298 220

## Description

### Field of the invention

The present invention relates to a pipe coupling, in particular a pipe coupling for making a push fit connection with a pipe.

### Background

Dutch patent application NL2013426 describes a pipe coupling comprising a main body sleeve having arranged therein a resilient C-shaped clamp ring for clamping engagement with an inserted pipe. The clamp ring comprises an inner clamping surface having arranged there along a plurality of grabbing members, wherein each grabbing member is provided with a plurality inwardly projecting barb-like elements for engagement with an outer surface of an inserted pipe.

International application WO 03/048625 A1 discloses a plumbing joint having a body with a taper which gradually decreases in diameter. A jaw coupling is installed in the body with jaws that are adopted to increase/decrease in an inside diameter in sliding movement along an inner periphery of the taper to fix or release a pipe which is inserted into the jaw coupling.

US patent publication US 4,298,220 discloses a pipe joint having a radially displaceable clamp ring located within a cylindrical joint casing to circumvent a pipe passage along which a pipe is to be inserted. The clamp ring is movable between an inner concentric position and an outer eccentric position and provided with a sharp edge around the inner periphery thereof. Upon inserting a pipe into the joint casing, the clamp ring is pushed into the inner concentric position to allow passage of the pipe and, as soon as the pipe is fully inserted into a connected position, the clamp ring is pressed toward the outer eccentric position by a spring, clamping the pipe securely in the connected position by the sharp edge on the inner periphery of the ring.

### Summary of the invention

The present invention aims to provide a pipe coupling, in particular a push fit pipe coupling, wherein the pipe coupling provides improved security, reliability and increased pull-out resistance.

According to the present invention, a pipe coupling of the type defined in the preamble is provided comprising a main tubular body provided with a pipe receiving bore and a radially deformable clamp ring arranged in the main tubular body for clamping engagement with an inserted pipe. The clamp ring is linearly moveably within the main tubular body in axial direction of the pipe receiving bore between a ring insertion position and a ring locking position, wherein the clamp ring is in wedged engagement with the main tubular body. The pipe coupling further comprises a resilient biasing member arranged within the main tubular body configured for providing positional bias of the clamp ring in the axial direction from the ring insertion position toward the ring locking position. The clamp ring further comprises the biasing member and a grabbing insert for radially grabbing and axially locking an inserted pipe, wherein the grabbing insert is arranged along a circumferential inner surface of the clamp ring. The biasing member is attached to the grabbing insert and comprises one or more circumferentially arranged and axially protruding resilient portions for abutment with the main tubular body.

The pipe coupling of the present invention allows the clamp ring to be constantly biased toward the ring locking position at which the wedged engagement between the clamp ring and the main tubular body is the strongest. As a result sole reliance on pipe pull-out forces to move the clamp ring to the ring locking position is circumvented. Furthermore, as the clamp ring is forced toward the ring locking position by the biasing member, an inserted pipe can remain deeper in the pipe coupling as sufficient clamping engagement between the clamp ring and the pipe is reached sooner upon insertion of a pipe, i.e. pipe pull-out forces are not needed to intensify the wedged engagement between the clamp ring and the main tubular body. The biasing member thus ensures an immediate pull-out resistance connection upon insertion of a pipe.

In an exemplary embodiment the biasing member comprises a resilient spring element extending in the axial direction between the main tubular body and the clamp ring, allowing for a continuous and reliable biasing force that ensures the clamp ring is axially biased toward the ring locking position.

In an embodiment, the biasing member may be attached to the clamp ring such that it resiliently abuts or contacts the main tubular body. In a further embodiment the biasing member may be attached to the main tubular body such that it resiliently abuts or contacts the clamp ring. Any of these embodiments maintain correct placement, orientation and alignment of the biasing member with respect to the main tubular body and the clamp ring.

In a particular embodiment one or more of the protruding resilient portions, or each of them, may be formed as a leaf spring or coil spring. In a further embodiment the grabbing insert and the plurality of protruding resilient portions may be formed as a single piece (or unitary) component, thereby simplifying manufacturing and reducing cost of the pipe coupling for reliably grabbing an inserted pipe, the grabbing insert and the protruding resilient portions may be made of metal.

### Brief description of the drawings

The present invention will be discussed in more detail below, with reference to the attached drawings, in which
Figure 1 shows a three dimensional cross section of a pipe coupling according to an embodiment of the present invention;
Figure 2 shows another cross section of a pipe coupling according to an embodiment of the present invention;
Figure 3 shows a three dimensional view of a clamp ring as used in the pipe coupling according to an embodiment of the present invention; and
Figure 4a to 4c each show a schematic view of a pipe coupling configuration upon insertion of a pipe according to an example for understanding the invention but wherein figures 4a to 4c do not represent the claimed invention as such.

### Detailed description of the embodiments

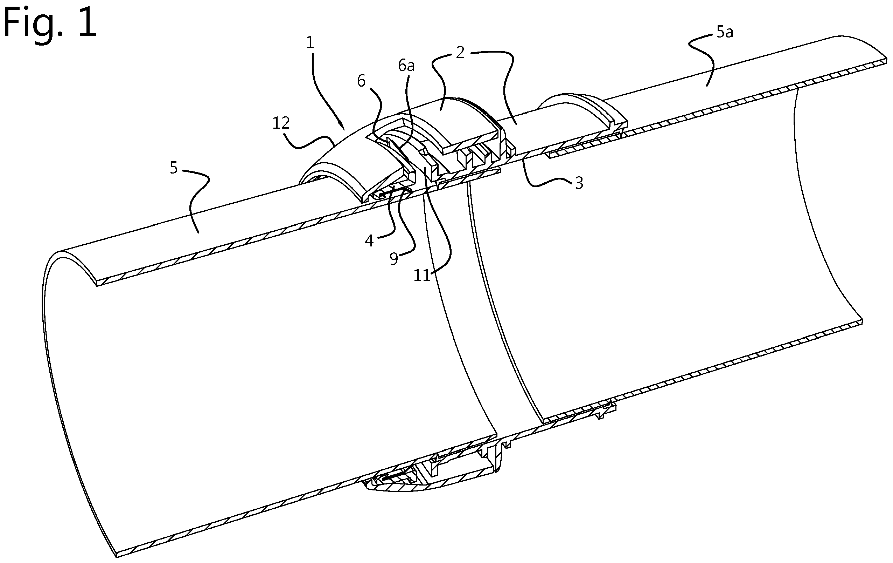

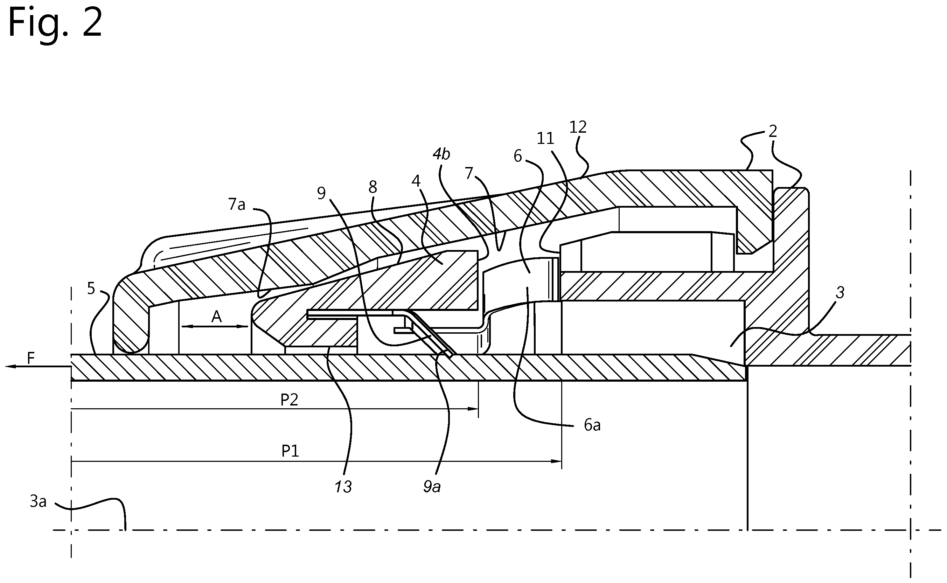

Referring to Figure 1 and Figure 2, the pipe coupling 1 of the present invention for push fit insertion of a pipe comprises a main tubular body 2 having a pipe receiving bore 3. A radially deformable clamp ring 4 is provided and arranged in the main tubular body 2, wherein the clamp ring 4 is configured for clamping engagement with an inserted pipe 5 in operation. Because the clamp ring 4 is radially deformable, a snug and tight clamping engagement with the pipe 5 can be ensured even for small variations of pipe diameters or small mutual orientation variations. The pipe coupling 1 as shown is capable of connecting an inserted pipe 5 with, for example, a further pipe, adapter piece 5a and the like.

The clamp ring 4 is linearly moveable with respect to the main tubular body 2 in an axial direction "A" of the pipe receiving bore 3 between a ring insertion position P1 and a ring locking position P2, wherein the clamp ring 4 is in wedged engagement with the main tubular body 2. The wedged engagement provides radial deformation of the clamp ring 4 such that a clamping force can be imposed by the clamp ring 4 on the inserted pipe 5, wherein the wedged engagement intensifies or relaxes through axial displacement of the clamp ring 4 within the main tubular body 2.

For maximum clarity, the phrases "axial direction", "axially" or just "axial" as used in the present application are to be construed as referring to directions substantially parallel to a longitudinal/lengthwise axis 3a of the pipe receiving bore 3, which will typically coincide with a lengthwise axis of an inserted pipe 5. The phrases "radial direction", "radially" or just "radial" on the other hand are to be construed as referring to directions substantially perpendicular to the axial direction, i.e. the longitudinal/lengthwise axis 3a of the pipe receiving bore 3.

The ring insertion position P1 may be considered to be an innermost position of the clamp ring 4 within the main tubular body 2 at which the wedged engagement between the clamp ring 4 and the main tubular body 2 is minimal or at a minimum. The ring locking position P2 on the other hand may be considered to be a position of the clamp ring 4 within the main tubular body 2 at which the wedged engagement is at an elevated intensity such that sufficient clamping force is imposed on an inserted pipe 5 by the clamp ring 4 to reliably resist pull-out forces.

Note that the ring locking position P2 is not a fixed absolute position within the main tubular body 2 as it may vary for different pipe materials, dimensional variations etc. Also, the ring locking position P2 may dependent on pull-out forces *F* exerted on an inserted pipe 5. That is, when a pull-out force *F* is exerted on an inserted pipe 5, the clamp ring 4 may move slightly further in axial direction away from the ring insertion position P1 such that the wedged engagement between the clamp ring 4 and the main tubular body 2 intensifies even further.

In an exemplary embodiment, the wedged engagement between the clamp ring 4 and the main tubular body 2 may be provided through a sloped inner surface 7 of the main tubular body 2 in e.g. sliding engagement with a corresponding sloped outer surface 8 of the clamp ring 4. This embodiment allows wedged engagement between the clamp ring 4 and the main tubular body 2 to intensify when the clamp ring 4 is displaced in axial direction away from the ring insertion position P1 toward the ring locking position P2. In an advantageous embodiment the inner and outer sloped surfaces 7, 8 may be conical surfaces for example, so that the clamp ring 4 and its conical outer surface wedges itself against the conical inner surface of the tubular body 2 when the clamp ring 4 moves in axial direction away from the ring insertion position P1.

The pipe coupling 1 further comprises a biasing member 6, e.g. a resilient biasing member, arranged within the main tubular body 2 and axially biasing the clamp ring 4 from the ring insertion position P1 toward the ring locking position P2. The biasing member 6 provides continuous positional bias of the clamp ring 4 toward the ring locking position P2, such that fast and immediate clamping force and pull-out resistance is achieved upon insertion of a pipe 5 into the pipe coupling 1. The biasing member 6 is thus configured to continuously facilitate and intensify wedged engagement between the clamp ring 4 and the tubular body 2.

The biasing member 6 comprises a resilient spring element extending in the axial direction between the main tubular body 2 and the clamp ring 4, wherein the resilient spring element allows for a simple but reliable axial biasing force to be imposed on the clamp ring 4 such that continuous positional bias to the ring locking position P2 is provided.

In an exemplary embodiment comprised by the claimed invention, the biasing member 6 is attached to the clamp ring 4 and resiliently abuts or contacts ("touches") the main tubular body 2. Conversely, in an alternative embodiment which is not part of the claimed present invention, the biasing member 6 may be attached to the main tubular body 2 and resiliently abut or contact the clamp ring 4. Both embodiments allow and maintain correct placement and alignment of the biasing member 6 with respect to the main tubular body 2 and the clamp ring 4, ensuring that positional bias toward the ring locking position P2 is guaranteed. As the biasing member 6 resiliently abuts/contacts either the clamp ring 4 or the main tubular body 2, the clamp ring 4 does not require a particular angular position about the longitudinal/lengthwise axis 3a of the pipe receiving bore 3 in order to reliably provide positional bias toward the ring locking position P2.

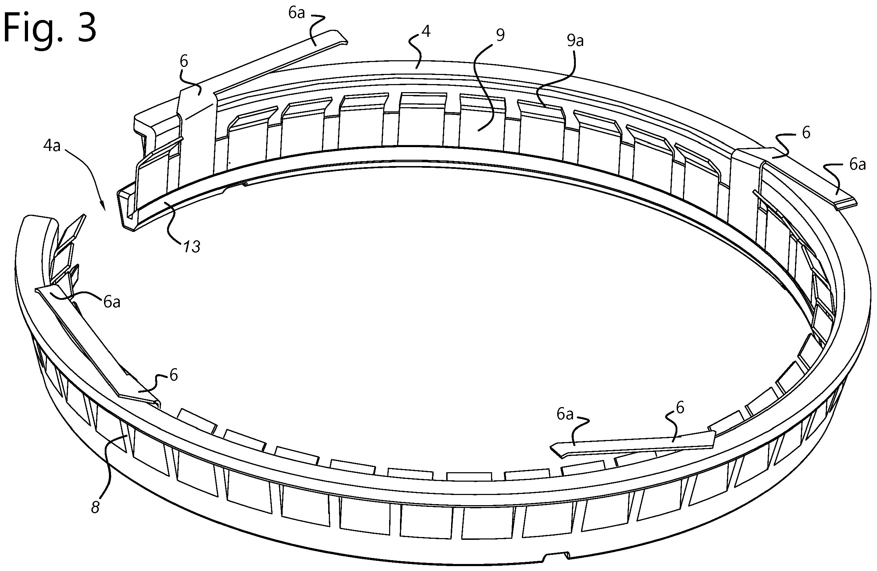

Looking at the clamp ring 4 in further detail, Figure 3 shows a three dimensional view of a clamp ring 4 as used in the pipe coupling 1 according to an embodiment of the present invention. In the embodiment shown, the clamp ring 4 may be cut and have a ring opening 4a allowing for radial deformation of the clamp ring 4 such that an inserted pipe 5 can be clamped. In an embodiment the clamp ring 4 may be made of plastic to facilitate resiliency and radial deformation when in wedged engagement with the main tubular body 2.

The clamp ring 4 further comprises a grabbing insert 9 for radially grabbing and axially locking an inserted pipe 5, wherein the grabbing insert 9 is arranged along a circumferential inner surface of the clamp ring 4. In an exemplary embodiment the grabbing insert 9 comprises a plurality of circumferentially arranged and inwardly protruding/projecting tines, prongs or teeth 9a, thereby contributing to improved pull-out resistance of an inserted pipe 5. In an exemplary embodiment, the grabbing insert 9 be seen as a ring shaped inlay arranged along an inner circumference or circumferential inner surface of the clamp ring 4.

In the embodiment shown, the clamp ring 4 comprises the biasing member 6 and a grabbing insert 9 for radially grabbing and axially locking an inserted pipe 5, wherein the biasing member 6 is attached to the grabbing insert 9 and the biasing member 6 comprises one or more circumferentially arranged and axially protruding resilient portions 6a for abutment with the main tubular body 2. So in this embodiment the resilient portions 6a protrude or project in axial direction *A* of the clamp ring 4, i.e. in axial direction of the pipe receiving bore 3, such that the a biasing force on the clamp ring 4 can be generated as the resilient portions 6a abut the main tubular body 2.

The the grabbing insert 9 and the biasing member 6 form a single piece (or unitary) component, so that a single material can be used, e.g. metal, to manufacture the grabbing insert 9 and the biasing member 6 as a single piece unit. This embodiment also allows the clamp ring 4 to be made of a different material, e.g. plastic, to optimize radial deformation and resiliency, for example, whilst the grabbing insert 9 with the biasing member 6 form a single piece component made of another material, e.g. metal, and provided as a ring shaped inlay as mentioned above.

The one or more protruding resilient portions 6a abut an abutment surface 11 of the main tubular body 2, wherein the abutment surface 11 is arranged normal or substantially perpendicular to the axial direction A, i.e. normal to the lengthwise axis 3a of the pipe receiving bore 3. This embodiment is exemplified in Figure 2, wherein the protruding resilient portions 6a axially protrude from the clamp ring 4 in the direction of the abutment surface 11. The one or more protruding resilient portions 6a may in an embodiment be configured for sliding engagement with the abutment surface 11 to allow the biasing member 6 to deform, change angular position etc. with respect to the abutment surface 11 when imposing a biasing force.

The abutment surface 11 may in an exemplary embodiment extend around the lengthwise axis 3a completely, so that the clamp ring 4, and in particular the one or more protruding resilient portions 6a, can be positioned in any angular position about the lengthwise axis 3a for providing the positional bias toward the ring locking position P2.

In an exemplary embodiment, the one or more protruding resilient portions 6a each comprise a resilient spring leaf or coil element. A resilient spring leaf or coil element facilitates abutment or contact engagement as well as sliding engagement with the abutment surface 11, so that deformation of the one or more protruding resilient portions 6a is facilitated when a bias force is imposed.

As mentioned earlier, wedged engagement between the clamp ring 4 and the main tubular body 2 can be achieved when the main tubular body 2 comprises a sloped inner surface 7 in sliding engagement with a corresponding sloped outer surface 8 of the clamp ring 4, wherein the inner and outer surfaces 7, 8 may be conical surfaces. The sloped inner and outer surfaces 7, 8 allow wedged engagement between the clamp ring 4 and the main tubular body 2 to change in intensity when the clamp ring 4 displaces in axial direction. In the embodiment of Figure 2, for example, the sloped inner surface 7 has a larger inner diameter at the ring insertion position P1 than the inner diameter at the ring locking position P2. So when the clamp ring 7 moves toward the ring locking position P2, the wedged engagement intensifies and the clamp ring 4 shrinks in radial direction and clamps the inserted pipe 5.

In an advantageous embodiment, the clamp ring 4 comprises a sloped outer surface 8 in sliding engagement with a sloped inner surface 7 of the main tubular body 2, wherein the sloped inner surface 7 comprises a radially inward protruding ridge portion 7a. The ridge portion 7a provides a localised accelerated change in clamping engagement for a particular axial displacement of the clamp ring 4. More precisely, the ridge portion 7a locally intensifies and accelerates wedged engagement between the clamp ring 4 and the main tubular body 2 over a relatively small axial displacement of the clamp ring 4 as the sloped outer surface 8 of the clamp ring 4 engages with the ridge portion 7a. The positional bias imposed by the biasing member 6 combined with the ridge portion 7a thus provides even faster (more instantaneous) pull-out resistance upon insertion of a pipe 5 in the pipe coupling 1.

In particular applications it may be desirable that an inserted pipe 5 is to be adjusted slightly about its lengthwise axis to finalize installation. For that purpose there is provided an embodiment wherein the main tubular body 2 comprises a rotationally arranged outer ring member 12 in which the clamp ring 4 is linearly moveably in the axial direction and is in wedged engagement therewith. Should readjustment not be sufficient, and an inserted pipe 5 needs to be replaced entirely, then an embodiment is provided wherein the outer ring member 12 is releasably connected to the main tubular body 2, allowing the clamp ring 4 to relax when the outer ring member 12 is disconnected. In an exemplary embodiment the outer ring member 12 and the main tubular body 2 form a releasable bayonet coupling arrangement. Such a bayonet coupling arrangement allows a simple and effective mechanism for turning the outer ring member 12 to a particular angular position at which the outer ring member 12 becomes linearly movable in the axial direction A and removable from the main tubular body 2. Doing so allows the clamp ring 4 to radially enlarge such that clamping forces on an inserted pipe 5 disappear and the inserted pipe 5 is no longer locked within the pipe coupling 1.

Having a releasable connection between a pipe 5 and the pipe coupling 1 is also possible when the clamp ring 4 is provided with a grabbing insert 9 having radially inward protruding tines 9a. Removing the outer ring member 12 in axial direction A from the main tubular body 2 also allows the clamp ring 4 to radially enlarge and as such release the tines 9a from grabbing the inserted pipe 5.

In an advantageous embodiment, the outer ring member 12, the clamp ring 4 as well as the main tubular body 2 can each be made of a plastic or metal material. Advantageously, to facilitate sufficient resiliency and flexibility for clamping, the clamp ring 4 may be made of a plastic material. Note that the outer ring member 12 and the main tubular body 2 can be made of the same material, such as a plastic or metal material. In an even further embodiment the outer ring member 12, the main tubular body 2 and the clamp ring 4 are made of a plastic material, such as polypropylene. The grabbing insert 9 with the biasing member 6 may then be provided as a single piece component made of another material, e.g. metal, and provided as a ring shaped inlay along an inner circumference of the clamp ring 4. The pipe coupling 1 is then by and large made of plastic allowing cost effective manufacturing whilst providing secure and reliable pipe locking.

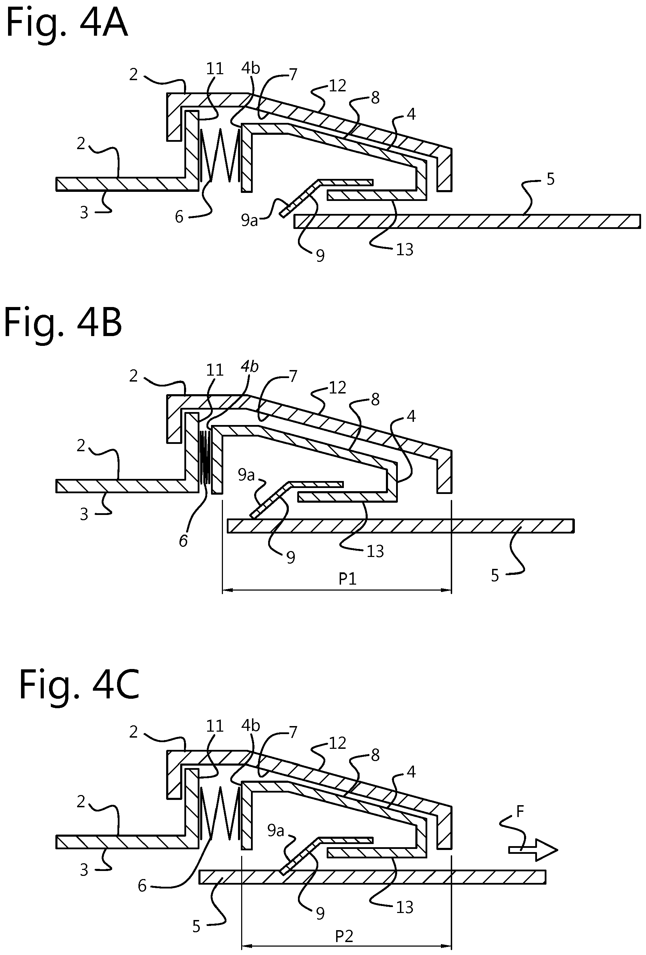

In actual use of the pipe coupling 1 when inserting a pipe 5, the main tubular body 2 and the clamp ring 4 interact in a manner as schematically depicted in Figure 4a to 4c.

In Figure 4a the pipe coupling 1 comprises the main tubular body 2 having the pipe receiving bore 3 and the radially deformable clamp ring 4 arranged in the main tubular body 2. The clamp ring 4 is linearly moveably within the main tubular body 2 in axial direction, i.e. along the longitudinal/lengthwise axis 3a of the pipe receiving bore 3 as depicted in Figure 2. The clamp ring 4 is in wedged engagement with the main tubular body 2. The biasing member 6 is arranged within the main tubular body 2 for providing the axial biasing force on the clamp ring 4, wherein the biasing member 6 comprises a resilient spring element extending in the axial direction between the main tubular body 2 and the clamp ring 4. The biasing member 6 may be embodied as a resilient spring leaf or coil element which resiliently abuts/contacts an abutment surface 11 of the main tubular body 2.

In an alternative embodiment, which is not part of the claimed invention, it is of course conceivable that the biasing member 6 resiliently abuts/contacts an abutment surface 4b of the clamp ring 4. Conversely, the biasing member 6 can be attached to the clamp ring 4 and resiliently abut/touch the main tubular body 2, e.g. through the abutment surface 11 thereof. The clamp ring 4 further comprises a grabbing insert 9 configured to radially grab and axially lock an inserted pipe 5 through a plurality of radially inward protruding tines 9a circumferentially arranged along the clamp ring 4.

When inserting a pipe 5 into the pipe coupling 1, at some position within the pipe coupling 1 the clamp ring 4 comes into contact with the pipe 5 due to the radial deformation of the clamp ring 1. This radial deformation is achieved as the biasing member 6 biases the clamp ring 4 toward the ring locking position P2, hence inducing elevated wedged engagement, which in turn imposes radial shrinkage of the clamp ring 4. In the depicted embodiment, the pipe 5 comes into (frictional) contact with, in this case, the grabbing insert 9 and in particular the plurality of circumferentially arranged and radially inward protruding tines 9a.

Figure 4b shows an embodiment wherein the pipe 5 has been inserted up to a point wherein the clamp ring 4 reached what is referred to as the ring insertion position P1, representing an inner most position of the clamp ring 4 within the pipe coupling 1 upon insertion of the pipe 5. Due to initial clamping engagement between the clamp ring 4 and the pipe 5, the clamp ring 4 is displaced in axial direction toward the main tubular body 2, i.e. the abutment surface 11, when the pipe 2 is being inserted. At the ring insertion position P1 the biasing member
6 is in a maximal compressed state and imposes a maximum biasing force on the clamp ring 4 in opposite direction to the displacement of the clamp ring 4 upon insertion of the pipe 5. In the embodiment of Figure 4b, the clamp ring 4 has now moved further over the pipe 5 due to the biasing force. Although the clamp ring 4 has reached the ring insertion position P1, so its inner most position within the main tubular body 2, the pipe 5 itself can be inserted further into the pipe receiving bore 3.

Figure 4c shows an embodiment wherein the pipe 5 has been fully inserted into the main tubular body 2 of the pipe coupling 1, wherein the biasing force imposed by the biasing member 6 caused the clamp ring 4 to move further over the pipe 5 toward the ring locking position P2. At the ring locking position P2 sufficient radial shrinkage is provided by wedged engagement between the main tubular body 2 and the clamp ring 4, thereby locking the inserted pipe 5 in axial direction by the clamp ring 4, i.e. the tines 9a.
From Figures 4a to 4c it is seen that the biasing member 6 of the present invention facilities movement of the clamp ring 4 over an inserted pipe 5 toward the ring locking position P2. This reduces sole reliance on pull-out forces *F* on an inserted pipe 5 to move the clamp ring 4 to the ring locking position P2 in order to obtain sufficient clamping. Furthermore, the biasing member 6 of the present invention allows an inserted pipe 5 to remain inserted deeper into the pipe coupling 1 as the clamp ring 4 is able to immediately provide sufficient clamping upon insertion of the pipe 5 without requiring pull-out movement of the pipe 5 to intensify clamping action.

The present invention has been described above with reference to a number of exemplary embodiments as shown in the drawings. Modifications and alternative implementations of some parts or elements are possible, and are included in the scope of protection as defined in the appended claims.

## Claims

1. A pipe coupling for push fit insertion of a pipe (5), comprising a main tubular body (2) provided with a pipe receiving bore (3) and a radially deformable clamp ring (4) arranged in the main tubular body (2) for clamping engagement with an inserted pipe (5) in operation,
wherein the clamp ring (4) is linearly moveable with respect to the main tubular body (2) in an axial direction (A) of the pipe receiving bore (3) between a ring insertion position (P1) and a ring locking position (P2), and wherein the clamp ring (4) is in wedged engagement with the main tubular body (2), the pipe coupling (1) further comprising
a biasing member (6) arranged within the main tubular body (2) and axially biasing the clamp ring (4) from the ring insertion position (P1) to the ring locking position (P2),
wherein the clamp ring (4) comprises the biasing member (6) and a grabbing insert (9) for radially grabbing and axially locking an inserted pipe (5), wherein the grabbing insert (9) is arranged along a circumferential inner surface of the clamp ring (4), and
wherein the biasing member (6) is attached to the grabbing insert (9) and comprises one or more circumferentially arranged and axially protruding resilient portions (6a) for abutment with the main tubular body (2), wherein the grabbing insert (9) and the biasing member (6) form a single piece component provided as a ring shaped inlay made of a material which is different from a material of the clamp ring (4).

2. The pipe coupling according to claim 1, wherein the biasing member (6) comprises a resilient spring element extending in the axial direction (A) between the main tubular body (2) and the clamp ring (4).

3. The pipe coupling according to claim 1 or 2, wherein the one or more protruding resilient portions (6a) abut an abutment surface (11) of the main tubular body (2) normal to the axial direction (A).

4. The pipe coupling according to any one of claims 1-3, wherein the one or more protruding resilient portions (6a) each comprise a resilient spring leaf or coil element.

5. The pipe coupling according to any one of claims 1-4, wherein the grabbing insert (9) and the biasing member (6) are made of metal.

6. The pipe coupling according to any one of claims 1-5, wherein the grabbing insert (9) comprises a plurality of circumferentially arranged and inwardly protruding tines (9a).

7. The pipe coupling according to anyone of claims 1-6, wherein the clamp ring (4) comprises a sloped outer surface (8) in sliding engagement with a sloped inner surface (7) of the main tubular body (2), wherein the sloped inner surface (7) comprises a radially inward protruding ridge portion (7a).

8. The pipe coupling according to any one of claims 1-7, wherein the main tubular body (2) comprises a rotationally arranged outer ring member (12), the clamp ring (4) being linearly moveable in the axial direction (A) within the outer ring member (12) and in wedged engagement therewith.

9. The pipe coupling according to claim 8, wherein the outer ring member (12) is releasable from the main tubular body (2).

10. The pipe coupling according to claim 8 or 9, wherein the outer ring member (12) and the main tubular body (2) form a releasable bayonet coupling arrangement.

11. The pipe coupling according to any one of claims 8-10, wherein the outer ring member (12), main tubular body (2), and the clamp ring 4 are made of a plastic material.

## Patentansprüche

1. Rohrkupplung zum Einstecken eines Rohres (5),
umfassend einen Hauptrohrkörper (2)
mit einer Rohraufnahmebohrung (3) und einem im Hauptrohrkörper (2) angeordneten, radial verformbaren Klemmring (4) zum Klemmeingriff mit einem eingesetzten Rohr (5) im Betrieb,
wobei der Klemmring (4) gegenüber dem Hauptrohrkörper (2) in axialer Richtung (A) der Rohraufnahmebohrung (3) zwischen einer Ringeinlegeposition (P1) und einer Ringsicherungsposition (P2) linear beweglich ist, und wobei der Klemmring (4) in Keilverbindung mit dem Hauptrohrkörper (2) steht, wobei die Rohrkupplung (1) ferner
ein Vorspannelement (6) umfasst, das innerhalb des Hauptrohrkörpers (2) angeordnet ist und den Klemmring (4) von der Ringeinlegeposition (P1) in die Ringsicherungsposition (P2) axial vorspannt,
wobei der Klemmring (4) das Vorspannelement (6) und einen Greifeinsatz (9) zum radialen Greifen und axialen Verriegeln eines eingesetzten Rohres (5) umfasst, wobei der Greifeinsatz (9) entlang einer Umfangsinnenfläche des Klemmrings (4) angeordnet ist, und
wobei das Vorspannelement (6) an dem Greifeinsatz (9) befestigt ist und einen oder mehrere in Umfangsrichtung angeordnete und axial vorstehende elastische Abschnitte (6a) zum Anschlag an den Hauptrohrkörper (2) umfasst, wobei der Greifeinsatz (9) und das Vorspannelement (6) eine einteilige Komponente bilden, die als ringförmige Einlage aus einem Material vorgesehen ist, das sich von einem Material des Klemmrings (4) unterscheidet.

2. Rohrkupplung nach Anspruch 1, wobei das Vorspannelement (6) ein elastisches Federelement umfasst, das sich in der axialen Richtung (A) zwischen dem Hauptrohrkörper (2) und dem Klemmring (4) erstreckt.

3. Rohrkupplung nach Anspruch 1 oder 2, wobei der eine oder die mehreren vorstehenden elastischen Abschnitte (6a) an einer Anschlagsfläche (11) des Hauptrohrkörpers (2) senkrecht zur Axialrichtung (A) anliegen.

4. Rohrkupplung nach einem der Ansprüche 1-3, wobei der eine oder die mehreren vorstehenden elastischen Abschnitte (6a) jeweils ein elastisches Federblatt- oder Spulenelement umfassen.

5. Rohrkupplung nach einem der Ansprüche 1-4, wobei der Greifeinsatz (9) und das Vorspannelement (6) aus Metall bestehen.

6. Rohrkupplung nach einem der Ansprüche 1-5, wobei der Greifeinsatz (9) eine Vielzahl von umlaufend angeordneten und nach innen vorstehenden Zinken (9a) umfasst.

7. Rohrkupplung nach einem der Ansprüche 1-6, wobei der Klemmring (4) eine schräge Außenfläche (8) in gleitendem Eingriff mit einer schrägen Innenfläche (7) des Hauptrohrkörpers (2) umfasst, wobei die schräge Innenfläche (7) einen radial nach innen vorstehenden Gratabschnitt (7a) umfasst.

8. Rohrkupplung nach einem der Ansprüche 1-7, wobei der Hauptrohrkörper (2) ein drehbar angeordnetes äußeres Ringelement (12) umfasst, wobei der Klemmring (4) linear in der axialen Richtung (A) innerhalb des äußeren Ringelements (12) und in Keilverbindung damit beweglich ist.

9. Rohrkupplung nach Anspruch 8, wobei das äußere Ringelement (12) vom Hauptrohrkörper (2) lösbar ist.

10. Rohrkupplung nach Anspruch 8 oder 9, wobei das äußere Ringelement (12) und der Hauptrohrkörper (2) eine lösbare Bajonettkupplungsanordnung bilden.

11. Rohrkupplung nach einem der Ansprüche 8-10, wobei das äußere Ringelement (12), der Hauptrohrkörper (2) und der Klemmring 4 aus einem Kunststoffmaterial bestehen.

## Revendications

1. Un raccord de tuyau pour montage par emboîtement d'un tuyau (5), comprenant un corps tubulaire principal (2) pourvu d'un alésage de réception du tuyau (3) et une bague de serrage radialement déformable (4) disposée dans le corps tubulaire principal (2) laquelle, en service, est en contact de serrage avec un tuyau inséré (5),
- dans lequel la bague de serrage (4) est déplaçable linéairement par rapport au corps tubulaire principal (2) dans une direction axiale (A) de l'alésage de réception du tuyau (3) entre une position d'insertion de bague (P1) et une position de verrouillage de bague (P2), et dans lequel la bague de serrage (4) est en prise coincée avec le corps tubulaire principal (2), le raccord de tuyau (1) comprenant en outre
un élément de sollicitation (6)) disposés dans le corps tubulaire principal (2) et sollicitant axialement la bague de serrage (4) de la position d'insertion de la bague (P1) à la position de verrouillage de la bague (P2),
- dans lequel la bague de serrage (4) comprend l'élément de sollicitation (6) et un insert de saisie (9) pour saisir radialement et verrouiller axialement un tuyau inséré (5), l'insert de saisie (9) étant disposé le long d'une surface interne circonférentielle de la bague de serrage (4), et
- dans lequel l'élément de sollicitation (6) est fixé à l'insert de saisie (9) et comprend une ou plusieurs parties élastiques (6a) disposées circonférentiellement et faisant saillie axialement pour venir en butée avec le corps du tube principal (2), dans lequel l'insert de saisie (9) et l'élément de sollicitation (6) forment un composant monobloc sous la forme d'un élément encastré en forme d'anneau constitué d'un matériau différent du matériau de la bague de serrage (4).

2. Le raccord de tuyau selon la revendication 1, dans lequel l'élément de sollicitation (6) comprend un élément élastique s'étendant dans la direction axiale (A) entre le corps tubulaire principal (2) et la bague de serrage (4).

3. Le raccord de tuyau selon la revendication 1 ou 2, dans lequel la ou les parties élastiques saillantes (6a) butent contre une surface de butée (11) du corps tubulaire principal (2) perpendiculaire à la direction axiale (A).

4. Le raccord de tuyau selon l'une quelconque des revendications 1 à 3, dans lequel la ou les parties élastiques en saillie (6a) comprennent chacune une feuille de ressort élastique ou un élément hélicoïdal.

5. Le raccord de tuyau selon l'une quelconque des revendications 1 à 4, dans lequel l'insert de saisie (9) et l'élément de sollicitation (6) sont formés d'un métal.

6. Le raccord de tuyau selon l'une quelconque des revendications 1 à 5, dans lequel l'insert de saisie (9) comprend une pluralité de dents (9a) agencées de manière circonférentielle et faisant saillie vers l'intérieur.

7. Le raccord de tuyau selon l'une quelconque des revendications 1 à 6, dans lequel la bague de serrage (4) comprend une surface extérieure inclinée (8) en prise coulissante avec une surface intérieure inclinée (7) du corps tubulaire principal (2), dans lequel la surface intérieure inclinée (7) comprend une partie de nervure faisant saillie radialement vers l'intérieur (7a).

8. Le raccord de tuyau selon l'une quelconque des revendications 1 à 7, dans lequel le corps tubulaire principal (2) comprend un élément annulaire extérieur agencé en rotation (12), la bague de serrage (4) pouvant être déplacée linéairement dans la direction axiale (A) dans l'élément annulaire extérieur (12) et en prise coincée avec celui-ci.

9. Le raccord de tuyau selon la revendication 8, dans lequel l'élément annulaire extérieur (12) est libérable du corps tubulaire principal (2).

10. Le raccord de tuyau selon la revendication 8 ou 9, dans lequel l'élément annulaire extérieur (12) et le corps tubulaire principal (2) forment un agencement d'accouplement à baïonnette libérable.

11. Le raccord de tuyau selon l'une quelconque des revendications 8 à 10, dans lequel l'élément annulaire extérieur (12), le corps tubulaire principal (2) et la bague de serrage (4) sont constitués d'un matériau en plastique.
